# EUROPEAN PATENT APPLICATION

(11) **EP 2 031 203 A1**
(43) Date of publication of application: **04.03.2009**
(21) Application number: 07744448.7
(22) Date of filing: 24.05.2007
(51) Int. Cl.: F01N 3/36, F01N 3/08

(54) **EXHAUST EMISSION PURIFYING SYSTEM FOR V-TYPE EIGHT-CYLINDER INTERNAL COMBUSTION ENGINE**

(30) Priority: 25.05.2006 JP 2006145308
(71) Applicant: TOYOTA JIDOSHA KABUSHIKI KAISHA, Aichi-ken, 471-8571 (JP)
(72) Inventor: KANTO, Yuji, Toyota-shi Aichi 471-8571 (JP)
(74) Representative: Kopp, Stephan
(86) International application number: PCT/JP2007/061037
(87) International publication number: WO 2007/139170

(57) **Abstract**

A technique is provided which is capable of suppressing the adhesion of fuel added from fuel addition valves to exhaust passages, and at the same time suppressing the fuel from slipping through exhaust gas purification devices. Timing of the addition of fuel at which fuel is added from the fuel addition valves 11, 12 is switched over into a period in which instantaneous exhaust gas flow rates in the exhaust passages are different from each other, in accordance with an engine operating condition. As a result, in case where the operating condition has a high possibility of fuel adhering to the exhaust pipes 7, 8, fuel is added at the time when the instantaneous exhaust gas flow rates in the exhaust pipes 7, 8 are high, so that the fuel can be easily carried to the vicinity of the exhaust gas purification devices 9, 10, while being entrained in the exhaust gas, thereby suppressing the fuel from adhering to the exhaust pipes 7, 8. In addition, in case where the operating condition has a high possibility of fuel slipping through the exhaust gas purification devices 9, 10, fuel is added at the time when the instantaneous exhaust gas flow rates in the exhaust pipes 7, 8 are low, so that the fuel can not be easily entrained in the exhaust gas to make the movement of the fuel slow, thereby suppressing the fuel from slipping through the exhaust gas purification devices 9, 10.

## Description

### TECHNICAL FIELD

The present invention relates to an exhaust gas purification system for a V-type 8-cylinder internal combustion engine.

### BACKGROUND ART

There has been known a technique in which a NOx storage reduction catalyst (hereinafter referred to as a NOx catalyst) is provided in an exhaust passage of an internal combustion engine in order to purify NOx in an exhaust gas of the internal combustion engine. Here, the NOx catalyst deteriorates in performance as an amount of NOx occluded therein increases. Accordingly, in order to recover the performance of the NOx catalyst, fuel is supplied to the NOx catalyst so that the NOx stored in the catalyst can be reduced and discharged (hereinafter referred to as "NOx reduction processing"). Also, it is known that so-called SOx poisoning, which deteriorates the performance of a NOx catalyst, is generated due to the SOx in an exhaust gas being stored into the NOx catalyst. For the purpose of eliminating this SOx poisoning so as to recover the performance, fuel might sometimes be supplied to the NOx catalyst (hereinafter referred to as "SOx poisoning recovery processing").

In addition, it has also been known a technique in which a filter is provided on an exhaust passage of an internal combustion engine in order to trap particulate matter (PM) in an exhaust gas of the internal combustion engine. In such a filter, as an amount of accumulation of the particulate matter captured or trapped increases, back pressure in the exhaust gas is raised due to a clogging of the filter, resulting in decreased engine performance. Therefore, to recover the performance of the filter, fuel is supplied to oxidize and remove the trapped PM (hereinafter, this is referred to as "PM regeneration processing", and the NOx reduction processing, the SOx poisoning recovery processing, and the PM regeneration processing are together referred to as "processing for recovering the performance").

Here, there has been known a technique in which a fuel addition valve for adding fuel to an upstream side of an exhaust gas purification device is provided in order to perform the processing for recovering the performance of the exhaust gas purification device such as the above-mentioned NOx catalyst, the above-mentioned filter, etc. Regarding such a technique, Japanese patent application laid-open No. 2001-280125 proposes that a fuel addition valve is mounted in an exhaust port of a cylinder which is the nearest to an exhaust-collector ring in an exhaust manifold, and which is the farthest from an opening portion of an EGR tube, so that fuel is added in synchronization with the timing at which an exhaust valve of that cylinder is in an open state. With such an arrangement, it is intended to supply fuel to the vicinity of an exhaust gas purification device while suppressing the fuel added from the fuel addition valve from being adhered to the exhaust manifold, and/or from flowing into the EGR tube.

In addition, Japanese patent application laid-open No. 2002-106332 proposes that in case where an amount of supply of a reducing agent to be used in one NOx reduction processing operation is calculated based on the load of an internal combustion engine, and the amount of the reducing agent thus calculated is to be added by dividing it in a plurality of times, a plurality of additions of the reducing agent are made to synchronize with the crank angle of the internal combustion engine, whereby they are performed at the time when an exhaust valve is opened. According to this, efficient additions of the reducing agent can be carried out while surely entraining the reducing agent in a stream of exhaust gas.

### DISCLOSURE OF THE INVENTION

The object of the present invention is to provide a technique which, in an exhaust gas purification system for a V-type 8-cylinder internal combustion engine, is capable of suppressing the adhesion of fuel added from fuel addition valves to exhaust passages, and at the same time suppressing the fuel from slipping or passing through exhaust gas purification devices.

In the present invention, the following construction is adopted. That is,
in an exhaust gas purification system for a V-type 8-cylinder internal combustion engine, comprising:
exhaust passages that are provided for individual banks, respectively, in the V-type 8-cylinder internal combustion engine and extend collectively from individual cylinders in the individual banks, respectively, so as to pass therein an exhaust gas from said internal combustion engine;
exhaust gas purification devices that are arranged on said exhaust passages, respectively, and are each constructed to include a catalyst having an oxidation function; and
fuel addition valves that are disposed on said exhaust passages at an upstream side of said exhaust gas purification devices, respectively, for adding fuel to the exhaust gas passing through said exhaust passages when the performance of said exhaust gas purification devices is to be recovered;
the exhaust gas purification system for a V-type 8-cylinder internal combustion engine is characterized in that timing of the addition of fuel at which fuel is added from said fuel addition valves is switched over into a period in which instantaneous exhaust gas flow rates in said exhaust passages are different from each other, in accordance with an engine operating condition.

The present invention is constructed such that the timing of the addition of fuel at which fuel is added from the fuel addition valves is switched over into a period in which instantaneous exhaust gas flow rates in said exhaust passages are different from each other, in accordance with an engine operating condition. For example, in case where the possibility of the fuel added from the fuel addition valves adhering to the exhaust passages is high due to the engine operating condition, the timing of the addition of fuel is switched over into a period in which the instantaneous exhaust gas flow rates are high. In addition, in case where the possibility of the fuel added from the fuel addition valves slipping through the exhaust gas purification devices is high due to the engine operating condition, the timing of the addition of fuel is switched over into a period in which the instantaneous exhaust gas flow rates are low.

Here, note that the instantaneous exhaust gas flow rates in the exhaust passages mean the flow rates of the exhaust gases in the exhaust passages in an extremely small or limited period of time in which the flow rates are changed due to the changes in the opened/closed state of the exhaust valves of cylinders. In the V-type 8-cylinder internal combustion engine, there are a period in which exhaust valves in two cylinders of the same bank are both in their open state, a period in which an exhaust valve in one cylinder of the same bank is in its open state, and a period in which exhaust valves in all the cylinders of the same bank are in their closed state, and the instantaneous flow rates of the exhaust gases in the exhaust passages change according to either of these periods. Therefore, it can be said that the instantaneous exhaust gas flow rates in the exhaust passages are flow rates that change in accordance with the time elapsed in the period of one cycle of the V-type 8-cylinder internal combustion engine.

According to this, in case where the operating condition has a high possibility that the fuel added from the fuel addition valves adheres to the exhaust passages, fuel is added from the fuel addition valves at the time when the instantaneous exhaust gas flow rates in the exhaust passages are high. As a result, the fuel can be easily carried to the vicinity of the exhaust gas purification devices while being entrained in the exhaust gas, whereby it is possible to suppress the fuel from adhering to the exhaust passages.

In addition, in case where the operating condition has a high possibility that the fuel added from the fuel addition valves slipping through the exhaust gas purification devices, fuel is added from the fuel addition valves at the time when the instantaneous exhaust gas flow rates in the exhaust passages are low. As a result, the fuel can not be easily entrained in the exhaust gas to make the movement of the fuel slow, whereby it is possible to suppress the fuel from slipping through the exhaust gas purification devices.

It is preferable that said timing of the addition of fuel be switched over into a period in which the instantaneous exhaust gas flow rates in said exhaust passages become smaller, in accordance with an increasing amount of accumulation of a flow rate of exhaust gas discharged in a predetermined cycle period.

Here, note that the amount of accumulation of a flow rate of exhaust gas discharged in a predetermined cycle period is an accumulated amount of a total flow rate of exhaust gas in the predetermined cycle period such as, for example, a crank angle interval or range of 720 degrees in which one cycle of each of all the cylinders in the V-type 8-cylinder internal combustion engine is completed, and it changes in accordance with an engine rotational speed, etc. When the engine rotational speed is low, the amount of accumulation becomes small, and the possibility of the fuel added from the fuel addition valves adhering to the exhaust passages becomes high. Whereas, when the engine rotational speed is high, the amount of accumulation becomes large, and the possibility of the fuel added from the fuel addition valves slipping through the exhaust gas purification devices becomes high.

According to this, fuel is added from the fuel addition valves at the time when the instantaneous exhaust gas flow rates in the exhaust passages are smaller, in accordance with the increasing amount of accumulation of the flow rate of exhaust gas discharged in the predetermined cycle period, whereby it is possible to suppress the fuel added from the fuel addition valves from adhering to the exhaust passages, and at the same time, it is also possible to suppress the fuel from slipping through the exhaust gas purification devices.

It is preferable that said timing of the addition of fuel be switched over into a period in which the instantaneous exhaust gas flow rates in said exhaust passages become smaller, in accordance with the higher temperature of the exhaust gas.

Here, note that when the temperature of the exhaust gas is low, droplets of fuel are large and hence it becomes difficult to entrain the fuel in the exhaust gas, thus resulting in a high possibility that the fuel added from the fuel addition valves adheres to the exhaust passages. On the other hand, when the temperature of the exhaust gas is high, droplets of fuel are small and it becomes easy to entrain the fuel in the exhaust gas, so there will be a high possibility of the fuel added from the fuel addition valves slipping through the exhaust gas purification devices.

According to this, fuel is added from the fuel addition valves at the time when the instantaneous exhaust gas flow rates in the exhaust passages are smaller, in accordance with the higher temperature of the exhaust gas, whereby it is possible to suppress the fuel added from the fuel addition valves from adhering to the exhaust passages, and at the same time, it is also possible to suppress the fuel from slipping through the exhaust gas purification devices.

It is preferable that said V-type 8-cylinder internal combustion engine be a V-type 8-cylinder internal combustion engine in which combustion can be continuously performed in predetermined two cylinders of the same bank in a crank angle interval of 90 degrees, and in which no combustion can be performed in any of the cylinders of the same bank in a crank angle interval of 180 degrees, and it is preferable that in accordance with the operating condition, said timing of the addition of fuel be switched over into one of the following periods, i.e., a period in which exhaust valves in two cylinders of the same bank in case where combustion is performed continuously in the crank angle interval of 90 degrees are both in their open state, a latter half period in which an exhaust valve in a predetermined one cylinder in case where no combustion is performed in a crank angle interval of 90 degrees before and after combustion is performed in the predetermined one cylinder of the same bank is in its open state, a former half period in which an exhaust valve in a predetermined one cylinder in case where no combustion is performed in a crank angle interval of 90 degrees before and after combustion is performed in the predetermined one cylinder of the same bank is in its open state, and a period in which exhaust valves in all the cylinders of the same bank in case where no combustion is performed in any cylinder in a crank angle interval of 180 degrees are in their closed state.

According to this, it is possible to switch over the instantaneous exhaust gas flow rates in the exhaust passages.

It is preferable that said V-type 8-cylinder internal combustion engine be a V-type 8-cylinder internal combustion engine in which combustion can be continuously performed in predetermined two cylinders of the same bank in a crank angle interval of 90 degrees, and in which no combustion can be performed in any of the cylinders of the same bank in a crank angle interval of 180 degrees, and it is preferable that when said amount of accumulation is equal to or smaller than a first predetermined amount of accumulation, said timing of the addition of fuel be switched to a period in which exhaust valves in two cylinders of the same bank in case where combustion is continuously performed in a crank angle interval of 90 degrees are both in their open state, and that when said amount of accumulation is equal to or more than a second predetermined amount of accumulation which is more than said first predetermined amount of accumulation, said timing of the addition of fuel be switched to a period in which exhaust valves in all the cylinders of the same bank in case where no combustion is performed in any cylinder in a crank angle interval of 180 degrees are in their closed state, and that when said amount of accumulation is more than said first predetermined amount of accumulation and is less than said second predetermined amount of accumulation, said timing of the addition of fuel be switched to a period in which an exhaust valve in a predetermined one cylinder in case where no combustion is performed in a crank angle interval of 90 degrees before and after combustion is performed in the predetermined one cylinder of the same bank is in its open state.

According to this, the timing of the addition of fuel can be divided in accordance with the instantaneous exhaust gas flow rates in the exhaust passages, so that fuel is added from the fuel addition valves at the time when the instantaneous exhaust gas flow rates in the exhaust passages are smaller, in accordance with the increasing amount of accumulation of the flow rate of exhaust gas discharged in the predetermined cycle period. Therefore, it is possible to suppress the fuel added from the fuel addition valves from adhering to the exhaust passages, and at the same time, it is also possible to suppress the fuel from slipping through the exhaust gas purification devices.

It is preferable that when said amount of accumulation is more than the first predetermined amount of accumulation and is equal to or less than a third predetermined amount of accumulation which is between the first predetermined amount of accumulation and the second predetermined amount of accumulation, said timing of the addition of fuel be switched to a latter half period in which the exhaust valve in said predetermined one cylinder is in its open state, and it is preferable that when said amount of accumulation is more than the third predetermined amount of accumulation which is between the first predetermined amount of accumulation and the second predetermined amount of accumulation, and is less than the second predetermined amount of accumulation, said timing of the addition of fuel be switched to a former half period in which the exhaust valve in said predetermined one cylinder is in its open state.

According to this, the timing of the addition of fuel can be divided more finely in accordance with the instantaneous exhaust gas flow rates in the exhaust passages, so that fuel can be added from the fuel addition valves at the time when the instantaneous exhaust gas flow rates in the exhaust passages are smaller, in accordance with the increasing amount of accumulation of the flow rate of exhaust gas discharged in the predetermined cycle period. Therefore, it is possible to suppress the fuel added from the fuel addition valves from adhering to the exhaust passages, and at the same time, it is also possible to suppress the fuel from slipping through the exhaust gas purification devices.

### BRIEF DESCRIPTION OF THE DRAWINGS

FIG. 1 is a view showing the schematic construction of an internal combustion engine with its exhaust system to which an exhaust gas purification system is applied.
FIG. 2 is a view showing a valve-opening pattern of exhaust valves in individual cylinders of the internal combustion engine.
FIG. 3 is a view showing the change in the instantaneous flow rate of an exhaust gas.
FIG. 4 is a view showing a map for deciding fuel addition timing according to a first embodiment of the present invention.
FIG. 5 is a view showing a map for deciding fuel addition timing according to a second embodiment of the present invention.
FIG. 6 is a view showing the change in the instantaneous flow rate of an exhaust gas.

### BEST MODE FOR CARRYING OUT THE INVENTION

Hereinafter, reference will be made to specific embodiments of the present invention.

### < FIRST EMBODIMENT>

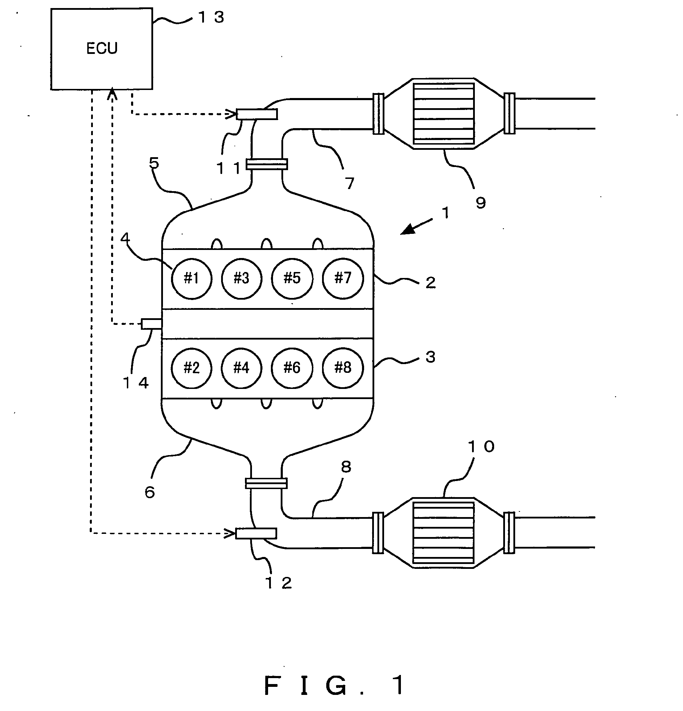

FIG. 1 illustrates the schematic construction of an internal combustion engine with its exhaust system according to an embodiment of the present invention. An internal combustion engine 1 illustrated in FIG. 1 is a V-type -8-cylinder four-cycle diesel engine.

The internal combustion engine 1 is constructed to be provided with two banks including a first bank 2 and a second bank 3. The first bank 2 is provided with 1 st, 3rd, 5th, and 7th cylinders, and the second bank 3 is provided with 2nd, 4th, 6th, and 8th cylinders.

A first exhaust manifold 5 connected to the individual cylinders 4 of the first bank 2 is connected to the first bank 2. A second exhaust manifold 6 connected to the individual cylinders 4 of the second bank 3 is connected to the second bank 3. The first and second exhaust manifolds 5, 6 each have branch pipe portions connected to the individual cylinders 4, respectively, and a collector ring portion that serves to collect or merge exhaust gases introduced from the branch pipe portions and flow them to a downstream side.

An exhaust pipe 7 is connected to a downstream side of the collector ring portion of the first exhaust manifold 5. Also, an exhaust pipe 8 is connected to a downstream side of the collector ring portion of the second exhaust manifold 6. The exhaust pipes 7, 8 are connected at their terminal ends to an unillustrated muffler. Here, the collector ring portions of the first and second exhaust manifolds 5, 6 and the exhaust pipes 7, 8 correspond to exhaust passages of the present invention.

In an intermediate portion of the exhaust pipe 7, there is arranged an exhaust gas purification device 9 that purifies particulate matter and NOx in the exhaust gas therein. Also, in an intermediate portion of the exhaust pipe 8, there is arranged an exhaust gas purification device 10 that purifies particulate matter and NOx in the exhaust gas therein. The exhaust gas purification devices 9, 10 each have a NOx storage reduction catalyst with an oxidation function carried or supported on a filter of a wall flow type composed of a porous substrate. Here, the exhaust gas purification devices 9, 10 correspond to an exhaust gas purification device of the present invention.

Here, note that the exhaust gas purification devices 9, 10 are not limited to the above-mentioned construction, but may instead be constructed, for example, to have a filter with no NOx storage reduction catalyst carried thereon, and a NOx storage reduction catalyst that is arranged in series with and at an upstream side of the filter.

A fuel addition valve 11 for adding fuel into the exhaust pipe 7 is disposed on the exhaust pipe 7 at an upstream side of the exhaust gas purification device 9. Also, a fuel addition valve 12 for adding fuel into the exhaust pipe 8 is disposed on the exhaust pipe 8 at an upstream side of the exhaust gas purification device 10. The fuel addition valves 11, 12 serve to add fuel in a process for recovering the performance of the exhaust gas purification devices 9, 10 such as NOx reduction processing, SOx poisoning recovery processing, PM regeneration processing, and the like of the exhaust gas purification devices 9, 10.

An electronic control unit (ECU) 13 for controlling the internal combustion engine 1 is provided in conjunction with the internal combustion engine 1 of the above construction. The ECU 13 controls the operating state or the like of the internal combustion engine 1 in accordance with the operating condition of the internal combustion engine 1 and driver's requirements, and, in addition to this, also controls the process of recovering the performance of the exhaust gas purification devices 9, 10.

Sensors such as a crank position sensor 14 and the like related to controlling the operating state of the internal combustion engine 1 are connected to the ECU 13 through electric wiring, so that output signals from these sensors can be input to the ECU 13. On the other hand, unillustrated fuel injection valves and the like in the internal combustion engine 1 are also connected to the ECU 13 through electrical wiring, and in addition, the fuel addition valves 11, 12 are connected to the ECU 13 through electrical wiring, so that these components or elements can be controlled by the ECU 13.

In addition, the ECU 13 includes a CPU, a ROM, a RAM and the like. The ROM stores programs for performing a variety of kinds of control on the internal combustion engine 1, maps storing relevant data, ant so on. Routines for the SOx poisoning recovery processing and the PM regeneration processing in addition to a routine for the NOx reduction processing to reduce the NOx stored in the exhaust gas purification devices 9, 10 are some of the programs stored in ROM of the ECU 13.

Next, reference will be made to the case in which fuel is added from the fuel addition valves 11, 12 in the processing of recovering the performance of the exhaust gas purification devices 9, 10 in this embodiment. At the time of the processing of recovering the performance of the exhaust gas purification devices 9, 10, fuel is added from the fuel addition valves 11, 12 into the exhaust pipes 7, 8 (hereinafter referred to as "the addition of fuel").

However, if, at the time of the addition of fuel, an accumulated amount of the flow rate of the exhaust gas discharged in the period of one cycle of the internal combustion engine 1 (hereinafter referred to as the amount of accumulation) is not sufficient, the fuel added from the fuel addition valves 11, 12 might not sometimes be entrained in the exhaust gas to be adhered to the exhaust pipes 7, 8. On the other hand, if the amount of accumulation is excessive, the fuel added from the fuel addition valves 11, 12 might sometimes be entrained in the exhaust gas to an excessive extent, so it might slip or pass through the exhaust gas purification devices 9, 10.

Here, note that the accumulated amount of the flow rate of the exhaust gas discharged in the period of one cycle of the internal combustion engine 1 is an accumulated amount of a total flow rate of the exhaust gas in an angular range of 720 degrees CA in which one cycle of each of all the cylinders in the V-type 8-cylinder diesel engine is completed, and it changes in accordance with the rotational speed of the engine, etc. The amount of accumulation decreases when the engine rotational speed is low, whereas the amount of accumulation increases when the engine rotational speed is high.

Here, in the V-type 8-cylinder diesel engine such as the internal combustion engine 1, the order of combustion of the cylinders in each bank is set, from the point of view of vibration prevention or the like, in such a manner that combustion does not occur at the same time in both banks. Therefore, the combustion of the cylinders in one bank occurs at unequal intervals.

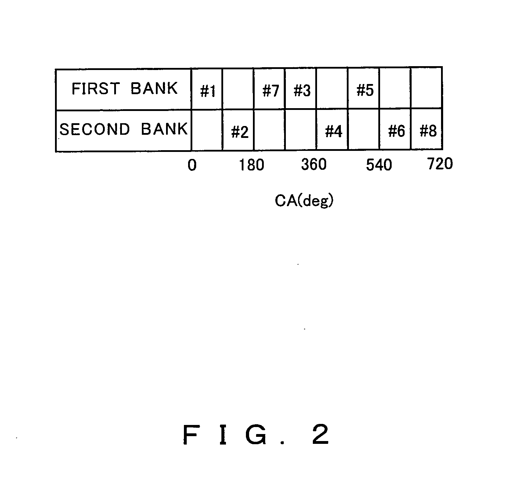

In FIG. 2, there is exemplified a valve-opening pattern of exhaust valves in the individual cylinders in the respective banks of a V-type 8-cylinder diesel engine such as the internal combustion engine 1. In FIG. 2, the axis of abscissa represents the crank angle, and an exhaust valve of a cylinder indicated in each grid is opened at a crank angle at the left end of that grid. Here, note that the width of each grid is 90 degrees CA, and this does not mean that the valve opening period of the exhaust valve of each cylinder is 90 degrees CA, but only indicates the valve-opening start time of the exhaust valve of each cylinder. Therefore, the valve opening period of each exhaust valve is such that the exhaust valve of a cylinder shown in a grid is opened at a crank angle at the left end of that grid, and the exhaust valve of that cylinder is closed at a point within the following third grid. In other words, the valve opening period of the exhaust valve is 180 degrees CA or more.

In this embodiment, combustion in the first bank 2 is performed in order of 1 st, 7th, 3rd, and 5th cylinders, and combustion in the second bank 3 is performed in order of 2nd, 4th, 6th, and 8th cylinders. Therefore, the order of the exhaust strokes is similar to the order of the combustion strokes.

In addition, the valve-opening pattern of the exhaust valves is as shown in FIG. 2, so in this embodiment, the instantaneous flow rates of the exhaust gases in the exhaust pipes 7, 8 in the period of one cycle of the internal combustion engine 1 (hereinafter referred to as instantaneous exhaust gas flow rates) change.

Here, note that the instantaneous exhaust gas flow rates mean the flow rates of the exhaust gases in the exhaust pipes 7, 8 in an extremely small or limited period of time in which the flow rates are changed due to the changes in the opened/closed state of the exhaust valves of the cylinders. In the V-type 8-cylinder diesel engine, there are a period of time in which the exhaust valves in two cylinders of the same bank are in their open state, or a period of time in which the exhaust valve in one cylinder of the same bank is in its open state, or a period of time in which the exhaust valves in all the cylinders of the same bank are in their closed state, and the instantaneous flow rates of the exhaust gases in the exhaust pipes 7, 8 change according to either of these periods of time. Therefore, it can be said that the instantaneous exhaust gas flow rates in the exhaust pipes 7, 8 are flow rates that change in accordance with the time elapsed in the period of one cycle of the V-type 8-cylinder diesel engine.

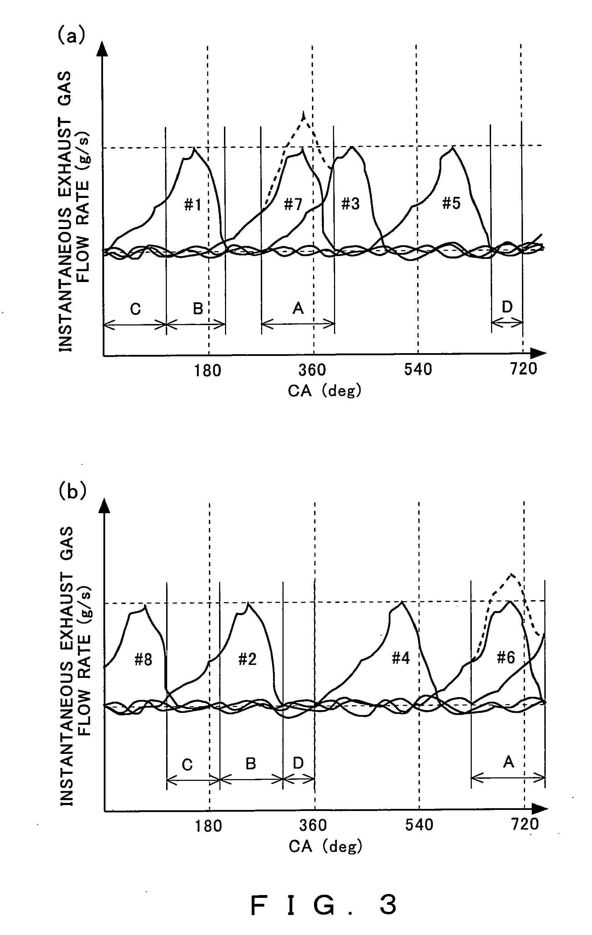

Here, reference will be made, based on FIG. 3, to the changes in the instantaneous flow rates of the exhaust gases discharged from the individual cylinders to the exhaust pipes 7, 8 in this embodiment. FIG. 3(a) shows the change in the instantaneous exhaust gas flow rate in the exhaust pipe 7, and FIG. 3(b) shows the change in the instantaneous exhaust gas flow rate in the exhaust pipe 8. In addition, in FIG. 3, the instantaneous exhaust gas flow rates shown by solid lines represent the instantaneous exhaust gas flow rates of the individual cylinders, and the instantaneous exhaust gas flow rates shown by broken lines represent total instantaneous exhaust gas flow rates in a period of time in which the exhaust valves of two cylinders of the same bank are in their open state (i.e., overlapped state).

In the 7th and 3rd cylinders of the first bank 2 and in the 6th and 8th cylinders of the second bank 3, combustion is performed continuously in a range of 90 degrees CA. Therefore, as shown in a period A of FIG. 3, periods in which the exhaust valves of two cylinders are both in their open state overlap with each other. In the period (period A) in which the periods in which the exhaust valves of two cylinders are both in their open state overlap with each other, the instantaneous exhaust gas flow rates in the exhaust pipes 7, 8 increase, as shown by the broken lines, due to the merging of the exhaust gases discharged from these two cylinders. As a result, the largest instantaneous exhaust gas flow rates in the exhaust pipes 7, 8 are formed in the period (period A) in which the exhaust valves of two cylinders are both in their open state.

In addition, in the 1 st cylinder and the 5th cylinder of the first bank 2 and in the 2nd cylinder and the 4th cylinder of the second bank 3, respectively, before and after combustion is performed in one of these cylinders, combustion in the other cylinders is not performed at an interval of 90 degrees CA or more. At the time when the combustion is carried out in that one cylinder, there is a period in which the exhaust valve of that one cylinder is in its open state, and in the period in which the exhaust valve of this one cylinder is in its open state, the instantaneous flow rate of the exhaust gas discharged from that one cylinder becomes the instantaneous exhaust gas flow rate in the exhaust pipe 7 or 8.

Here, note that the instantaneous flow rate of the exhaust gas discharged from the one cylinder differs between in a former or first half period in which the exhaust valve of the one cylinder is in its open state, and in a latter or second half period in which the exhaust valve of the one cylinder is in its open state. That is, as shown in FIG. 3, the instantaneous exhaust gas flow rate in the latter half period (period B) in which the exhaust valve is in its open state is larger than that in the former half period (period C) in which the exhaust valve is in its open state.

As a result, the instantaneous exhaust gas flow rates, being the second largest in the exhaust pipes 7, 8, are formed in the latter half period (period B) in which the exhaust valve in one cylinder is in its open state. In addition, the instantaneous exhaust gas flow rates being the third largest in the exhaust pipes 7, 8, are formed in the former half period (period C) in which the exhaust valve in one cylinder is in its open state.

Further, no combustion is performed in a range of 180 degrees CA between the combustion of the 5th cylinder and the combustion of the 1 st cylinder of the first bank 2 and between the combustion of the 2nd cylinder and the combustion of the 4th cylinder of the second bank 3. In case where no combustion is performed in the range of 180 degrees CA, there occurs a period (period D) in which the exhaust valves in all the cylinders of one of the banks are at their closed state, as shown in FIG. 3. In this period in which the exhaust valves in all the cylinders of one of the banks are at their closed state, the instantaneous exhaust gas flow rates in the exhaust pipes 7, 8 become the smallest. As a result, the smallest instantaneous exhaust gas flow rates in the exhaust pipes 7, 8 are formed in the period (period D) in which the exhaust valves in all the cylinders of one of the banks are at their closed state.

As described above, in the V-type 8-cylinder diesel engine such as the internal combustion engine 1, the instantaneous exhaust gas flow rates in the exhaust pipes 7, 8 change during the period of one cycle of the internal combustion engine 1. Therefore, in this embodiment, in view of the above-mentioned change in the instantaneous exhaust gas flow rates, in order to suppress the fuel added from the fuel addition valves 11, 12 from adhering to the exhaust pipes 7, 8 as well as suppress the fuel from slipping or passing through the exhaust gas purification devices 9, 10, the timing of the addition of fuel is switched over in accordance with the above-mentioned amount of accumulation, so that the instantaneous exhaust gas flow rates in the exhaust pipes 7, 8 are different. Here, in this embodiment, the amount of accumulation is made a parameter of the engine operating condition for switching over the timing of the addition of fuel.

That is, in this embodiment, the timing of the addition of fuel is switched into one of the above-mentioned four periods (period A through period D) so that the addition of fuel can be performed at a time at which the instantaneous exhaust gas flow rates become optimal for the amount of accumulation.

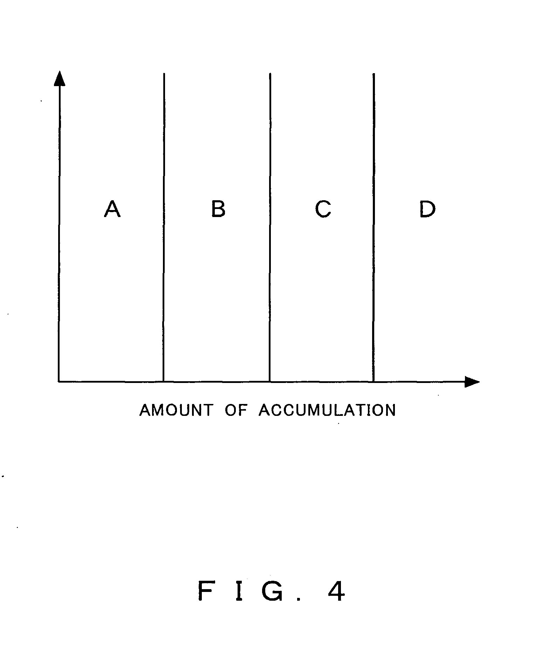

Specifically, as shown in FIG. 4, the timing of the addition of fuel is switched into one of the four periods (period A through period D) in which the instantaneous exhaust gas flow rates become smaller in accordance with the increasing amount of accumulation. Here, note that FIG. 4 is a map in which the amount of accumulation is represented on the axis of abscissa.

For example, when the engine rotational speed is in a low speed range, the amount of accumulation becomes the smallest. In this case, the addition of fuel is carried out at the time when the exhaust valves in two cylinders for which the instantaneous exhaust gas flow rates in the exhaust pipes 7, 8 in the period A are the largest are both in their open state.

When the engine rotational speed is in a low-medium speed range, the amount of accumulation becomes the second smallest. In this case, the addition of fuel is carried out in the latter half period in which the exhaust valve in one cylinder for which the instantaneous exhaust gas flow rates in the exhaust pipes 7, 8 in the period B are the second largest is in its open state.

When the engine rotational speed is in a medium-high speed range, the amount of accumulation becomes the third smallest. In this case, the addition of fuel is carried out in the former half period in which the exhaust valve in one cylinder for which the instantaneous exhaust gas flow rates in the exhaust pipes 7, 8 in the period C are the third largest is in its open state.

When the engine rotational speed is in a high speed range, the amount of accumulation becomes the largest. In this case, the addition of fuel is carried out at the time when the exhaust valves in all the cylinders of one of the banks for which the instantaneous exhaust gas flow rates in the exhaust pipes 7, 8 in the period D are the smallest are in their closed state.

Here, as shown in FIG. 4, the amount of accumulation at a boundary that divides the timing of the addition of fuel into the period A and the period B is a first predetermined amount of accumulation of the present invention, and the amount of accumulation at a boundary that divides the timing of the addition of fuel into the period C and the period D is a second predetermined amount of accumulation of the present invention, and the amount of accumulation at a boundary that divides the timing of the addition of fuel into the period B and the period C is a third predetermined amount of accumulation of the present invention.

As described above, in case where the amount of accumulation is not satisfactory in which there is a high possibility of the fuel added from the fuel addition valves 11, 12 adhering to the exhaust pipes 7, 8, by switching over the timing of the addition of fuel, fuel is added in a period, such as the period A or the like, in which the instantaneous exhaust gas flow rates in the exhaust pipes 7, 8 are large. As a result, the fuel can be easily carried to the vicinity of the exhaust gas purification devices 9, 10, while being entrained in the exhaust gas, whereby it is possible to suppress the fuel from adhering to the exhaust pipes 7, 8.

In addition, in case where the amount of accumulation is excessive in which there is a high possibility of the fuel added from the fuel addition valves 11, 12 slipping or passing through the exhaust gas purification devices 9, 10, fuel is added in a period, such as the period D or the like, in which the instantaneous exhaust gas flow rates in the exhaust pipes 7, 8 are small. As a result, the fuel can not be easily entrained in the exhaust gas to make the movement of the fuel slow, whereby it is possible to suppress the fuel from slipping through the exhaust gas purification devices 9, 10.

### < Second Embodiment >

In the first embodiment, by using the amount of accumulation as one parameter of the engine operating condition, the timing of the addition of fuel has been switched over into a period in which the instantaneous exhaust gas flow rates are different from each other, in accordance with this amount of accumulation. In a second embodiment, by using, in addition to this amount of accumulation, an exhaust gas temperature as one parameter of the engine operating condition, the timing of the addition of fuel is switched over into a period in which the instantaneous exhaust gas flow rates are different from each other, in accordance with this exhaust gas temperature, too. Here, note that explanation will be omitted for those which are similar to the components or parts of the first embodiment.

When the temperature of an exhaust gas is low, droplets of fuel are large and hence it becomes difficult to entrain the fuel in the exhaust gas, thus resulting in a high possibility that the fuel added from the fuel addition valves 11, 12 adheres to the exhaust pipes 7, 8. On the other hand, when the temperature of an exhaust gas is high, droplets of fuel are small and it becomes easy to entrain the fuel in the exhaust gas, so there is a high possibility of the fuel added from the fuel addition valves 11, 12 slipping through the exhaust gas purification devices 9, 10.

Therefore, in this embodiment, in view of the change in the instantaneous exhaust gas flow rates described in the first embodiment and the change in the temperature of the exhaust gas as referred to above, in order to suppress the fuel added from the fuel addition valves 11, 12 from adhering to the exhaust passages, and at the same time to suppress the fuel slipping or passing through the exhaust gas purification devices, the timing of the addition of fuel is switched into a period in which the instantaneous exhaust gas flow rates are different, in accordance with the amount of accumulation and the exhaust gas temperature.

That is, the timing of the addition of fuel is switched into one of the above-mentioned four periods (period A through period D) so that the addition of fuel can be performed at a time at which the instantaneous exhaust gas flow rates become optimal for the amount of accumulation and the temperature of the exhaust gas.

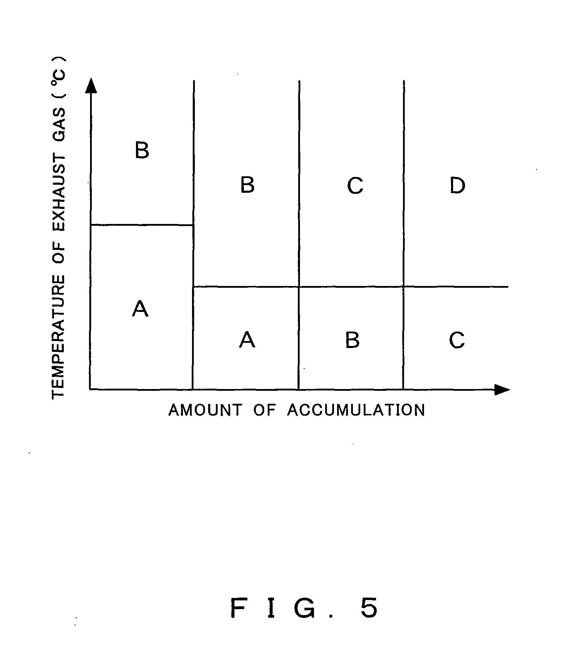

Specifically, as shown in FIG. 5, the timing of the addition of fuel is switched into one of the four periods (period A through period D) in which the instantaneous exhaust gas flow rates become smaller, in accordance with the increasing amount of accumulation and in accordance with the higher temperature of the exhaust gas. Here, note that FIG. 5 is a map in which the amount of accumulation is represented on the axis of abscissa, and the temperature of the exhaust gas is represented by the axis of ordinate.

For example, when the engine rotational speed is in the low speed range, the amount of accumulation becomes the smallest, and at the same time, when the engine load is equal to or less than a medium load, the temperature of the exhaust gas becomes low. In this case, the addition of fuel is carried out at the time when the exhaust valves in two cylinders for which the instantaneous exhaust gas flow rates in the exhaust pipes 7, 8 in the period A are the largest are both in their open state.

When the engine rotational speed is in the low speed range, the amount of accumulation becomes the smallest, and at the same time, when the engine load is equal to or higher than the medium load, the temperature of the exhaust gas becomes high. In this case, the addition of fuel is carried out in the latter half period in which the exhaust valve in one cylinder for which the instantaneous exhaust gas flow rates in the exhaust pipes 7, 8 in the period B are the second largest is in its open state.

When the engine rotational speed is in the low-medium speed range, the amount of accumulation becomes the second smallest, and at the same time, when the engine load is in a low load range, the temperature of the exhaust gas becomes low. In this case, the addition of fuel is carried out at the time when the exhaust valves in two cylinders for which the instantaneous exhaust gas flow rates in the exhaust pipes 7, 8 in the period A are the largest are both in their open state.

When the engine rotational speed is in the low-medium speed range, the amount of accumulation becomes the second smallest, and at the same time, when the engine load is in a medium-high load range, the temperature of the exhaust gas becomes high. In this case, the addition of fuel is carried out in the latter half period in which the exhaust valve in one cylinder for which the instantaneous exhaust gas flow rates in the exhaust pipes 7, 8 in the period B are the second largest is in its open state.

When the engine rotational speed is in the medium-high speed range, the amount of accumulation becomes the third smallest, and at the same time, when the engine load is in the low load range, the temperature of the exhaust gas becomes low. In this case, the addition of fuel is carried out in the latter half period in which the exhaust valve in one cylinder for which the instantaneous exhaust gas flow rates in the exhaust pipes 7, 8 in the period B are the second largest is in its open state.

When the engine rotational speed is in the medium-high speed range, the amount of accumulation becomes the third smallest, and at the same time, when the engine load is in the medium-high load range, the temperature of the exhaust gas becomes high. In this case, the addition of fuel is carried out in the former half period in which the exhaust valve in one cylinder for which the instantaneous exhaust gas flow rates in the exhaust pipes 7, 8 in the period C are the third largest is in its open state.

When the engine rotational speed is in the high speed range, the amount of accumulation becomes the largest, and at the same time, when the engine load is in the low load range, the temperature of the exhaust gas becomes low. In this case, the addition of fuel is carried out in the former half period in which the exhaust valve in one cylinder for which the instantaneous exhaust gas flow rates in the exhaust pipes 7, 8 in the period C are the third largest is in its open state.

When the engine rotational speed is in the high speed range, the amount of accumulation becomes the largest, and at the same time, when the engine load is in the medium-high load range, the temperature of the exhaust gas becomes high. In this case, the addition of fuel is carried out at the time when the exhaust valves in all the cylinders of one of the banks for which the instantaneous exhaust gas flow rates in the exhaust pipes 7, 8 in the period D are the smallest are in their closed state.

As described above, in case where the amount of accumulation is not satisfactory or the temperature of the exhaust gas is low in which there is a high possibility that the fuel added from the fuel addition valves 11, 12 adheres to the exhaust pipes 7, 8, by switching over the timing of the addition of fuel, fuel is added in a period, such as the period A or the like, in which the instantaneous exhaust gas flow rates in the exhaust pipes 7, 8 are large. As a result, the fuel can be easily carried to the vicinity of the exhaust gas purification devices 9, 10, while being entrained in the exhaust gas, whereby it is possible to suppress the fuel from adhering to the exhaust pipes 7, 8.

In addition, in case where the amount of accumulation is excessive or the temperature of the exhaust gas is high in which there is a high possibility of the fuel added from the fuel addition valves 11, 12 slipping or passing through the exhaust gas purification devices 9, 10, fuel is added in a period, such as the period D or the like, in which the instantaneous exhaust gas flow rates in the exhaust pipes 7, 8 are small. As a result, the fuel can not be easily entrained in the exhaust gas to make the movement of the fuel slow, whereby it is possible to suppress the fuel from slipping through the exhaust gas purification devices 9, 10.

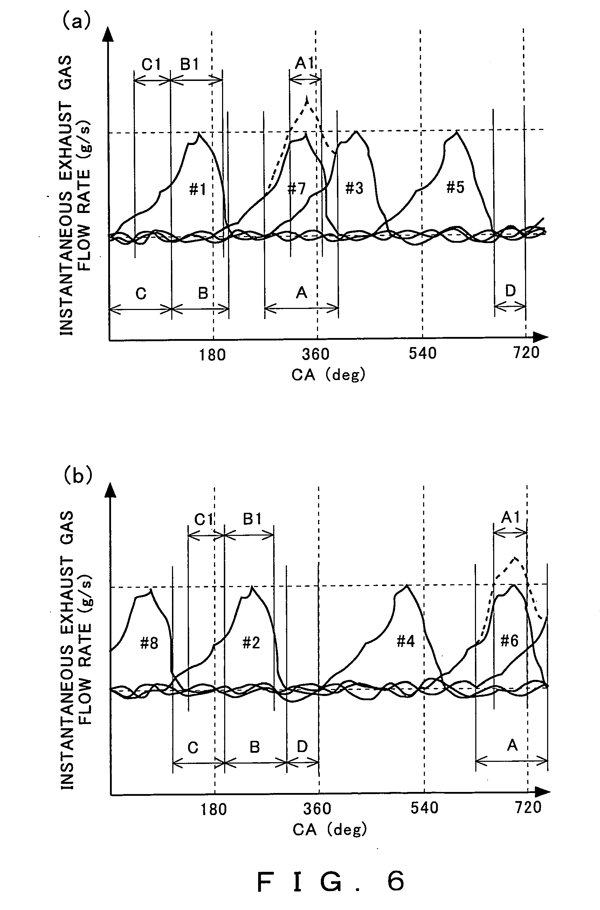

Although in the above-mentioned embodiment, the timing of the addition of fuel is switched over among the periods A through D, an upper limit and a lower limit for the instantaneous exhaust gas flow rates at the time of the addition of fuel may further be set. For example, in order to satisfy the relation of the instantaneous exhaust gas flow rates in the period A > the instantaneous exhaust gas flow rates in the period B > the instantaneous exhaust gas flow rates in the period C > the instantaneous exhaust gas flow rates in the period D in a reliable manner, the timing of the addition of fuel is switched over in only a period A1 within the period A, in only a period B1 within the period B, in only a period C1 within the period C, and in the period D, as shown in FIG. 6. According to this, the order or sequence of the instantaneous exhaust gas flow rates in each of the periods (A1, B1, C1, D) is made clear, so it is possible to suppress the fuel added from the fuel addition valves 11, 12 from adhering to the exhaust pipes 7, 8 in a more suitable manner, and at the same time, it is also possible to suppress the fuel from slipping through the exhaust gas purification devices 9, 10 in a more suitable manner.

Here, note that the exhaust gas purification system for a V-type 8-cylinder internal combustion engine according to the present invention is not limited to the above-mentioned embodiments, but can be subjected to various changes or modifications within the range not departing from the spirit and scope of the present invention.

### INDUSTRIAL APPLICABILITY

According to the present invention, in an exhaust gas purification system for a V-type 8-cylinder internal combustion engine, it is possible to suppress the adhesion of fuel added from a fuel addition valve to an exhaust passages, and at the same time suppress the fuel from slipping or passing through an exhaust gas purification device.

## Claims

1. An exhaust gas purification system for a V-type 8-cylinder internal combustion engine, **characterized by** comprising:
exhaust passages that are provided for individual banks, respectively, in the V-type 8-cylinder internal combustion engine and extend collectively from individual cylinders in the individual banks, respectively, so as to pass therein an exhaust gas from said internal combustion engine;
exhaust gas purification devices that are arranged on said exhaust passages, respectively, and are each constructed to include a catalyst having an oxidation function; and
fuel addition valves that are disposed on said exhaust passages at an upstream side of said exhaust gas purification devices, respectively, for adding fuel to the exhaust gas passing through said exhaust passages when the performance of said exhaust gas purification devices is to be recovered;
wherein timing of the addition of fuel at which fuel is added from said fuel addition valves is switched over into a period in which instantaneous exhaust gas flow rates in said exhaust passages are different from each other, in accordance with an engine operating condition.

2. The exhaust gas purification system for a V-type 8-cylinder internal combustion engine as set forth in claim 1, **characterized in that** said timing of the addition of fuel is switched over into a period in which the instantaneous exhaust gas flow rates in said exhaust passages become smaller in accordance with an increasing amount of accumulation of a flow rate of exhaust gas discharged in a predetermined cycle period.

3. The exhaust gas purification system for a V-type 8-cylinder internal combustion engine as set forth in claim 1 or 2, **characterized in that** said timing of the addition of fuel is switched over into a period in which the instantaneous exhaust gas flow rates in said exhaust passages become smaller, in accordance with the higher temperature of the exhaust gas.

4. The exhaust gas purification system for a V-type 8-cylinder internal combustion engine as set forth in either one of claims 1 through 3,
**characterized in that**
said V-type 8-cylinder internal combustion engine is a V-type 8-cylinder internal combustion engine in which combustion can be continuously performed in predetermined two cylinders of the same bank in a crank angle interval of 90 degrees, and in which no combustion can be performed in any of the cylinders of the same bank in a crank angle interval of 180 degrees; and
in accordance with the engine operating condition, said timing of the addition of fuel is switched over into one of the following periods, i.e., a period in which exhaust valves in two cylinders of the same bank in case where combustion is performed continuously in the crank angle interval of 90 degrees are both in their open state, a latter half period in which an exhaust valve in a predetermined one cylinder in case where no combustion is performed in a crank angle interval of 90 degrees before and after combustion is performed in the predetermined one cylinder of the same bank is in its open state, a former half period in which an exhaust valve in a predetermined one cylinder in case where no combustion is performed in a crank angle interval of 90 degrees before and after combustion is performed in the predetermined one cylinder of the same bank is in its open state, and a period in which exhaust valves in all the cylinders of the same bank in case where no combustion is performed in any cylinder in a crank angle interval of 180 degrees are in their closed state.

5. The exhaust gas purification system for a V-type 8-cylinder internal combustion engine as set forth in claim 2, **characterized in that**
said V-type 8-cylinder internal combustion engine is a V-type 8-cylinder internal combustion engine in which combustion can be continuously performed in predetermined two cylinders of the same bank in a crank angle interval of 90 degrees, and in which no combustion can be performed in any of the cylinders of the same bank in a crank angle interval of 180 degrees;
when said amount of accumulation is equal to or smaller than a first predetermined amount of accumulation, said timing of the addition of fuel is switched to a period in which exhaust valves in two cylinders of the same bank in case where combustion is continuously performed in a crank angle interval of 90 degrees are both in their open state;
when said amount of accumulation is equal to or more than a second predetermined amount of accumulation which is more than said first predetermined amount of accumulation, said timing of the addition of fuel is switched to a period in which exhaust valves in all the cylinders of the same bank in case where no combustion is performed in any cylinder in a crank angle interval of 180 degrees are in their closed state; and
when said amount of accumulation is more than said first predetermined amount of accumulation and is less than said second predetermined amount of accumulation, said timing of the addition of fuel is switched to a period in which an exhaust valve in a predetermined one cylinder in case where no combustion is performed in a crank angle interval of 90 degrees before and after combustion is performed in the predetermined one cylinder of the same bank is in its open state.

6. The exhaust gas purification system for a V-type 8-cylinder internal combustion engine as set forth in claim 5, **characterized in that**
when said amount of accumulation is more than the first predetermined amount of accumulation and is equal to or less than a third predetermined amount of accumulation which is between the first predetermined amount of accumulation and the second predetermined amount of accumulation, said timing of the addition of fuel is switched to a latter half period in which the exhaust valve in said predetermined one cylinder is in its open state;
when said amount of accumulation is more than the third predetermined amount of accumulation which is between the first predetermined amount of accumulation and the second predetermined amount of accumulation, and is less than the second predetermined amount of accumulation, said timing of the addition of fuel is switched to a former half period in which the exhaust valve in said predetermined one cylinder is in its open state.
